# EUROPEAN PATENT APPLICATION

(11) **EP 3 984 348 A1**
(43) Date of publication of application: **20.04.2022**
(21) Application number: 21202027.5
(22) Date of filing: 11.10.2021
(51) Int. Cl.: A01G 3/04, A01G 3/053

(54) **CUTTING APPARATUS**

(30) Priority: 15.10.2020 CN 202011104572
(71) Applicant: Techtronic Cordless GP, Anderson, SC 29621 (US)
(72) Inventor: QIN, Xiao He, Dongguan (CN); LIAO, Jin Li, Dongguan (CN); CHEN, Yong Gang, Dongguan (CN); YU, Jie, Dongguan (CN)
(74) Representative: Novagraaf Group

(57) **Abstract**

A reciprocating cutting apparatus comprises a cutting unit (100), a drive unit (300), a control unit and a switch apparatus. The cutting unit comprises at least one cutter (110, 120) which reciprocates between two set points of maximum travel under the driving action of the drive unit (300), in order to perform a cutting operation, and the control unit is configured to stop the normal supply of power to the drive unit (300) when an abnormal event is detected, wherein the control unit is further configured to restore the normal supply of power to the drive unit (300) when a predetermined sequence of operations on the switch apparatus is detected, and control the drive unit (300) such that the cutting unit performs a reverse operation.

## Description

### Technical field

The present invention relates generally to a cutting apparatus, in particular a reciprocating cutting apparatus for trimming branches or bushes, for example a hedge trimmer.

### Background art

A hedge trimmer is a common example of a cutting apparatus for trimming branches or bushes. A cutting unit of a hedge trimmer generally comprises two reciprocating cutters. In the course of carrying out a job, the two cutters reciprocate relative to each other, in order to trim a branch or bush.

However, jams often occur during trimming operations. For example, when the branches being trimmed are too dense or too thick, the cutters will be unable to completely and successfully trim the branches between the blades, or some of the branches jam the cutters, preventing the cutters from moving forward, and so on. In this situation, the operator will need to perform an operation to clear the jam.

In a hedge trimmer based on a technology known to the applicant, the reciprocating blades are caused to move in reverse if jamming is detected, in order to release the jammed branch. After the reversal, the movement in reverse is maintained until another jam is detected, at which point the movement of the cutters is reversed again. A control apparatus of the hedge trimmer limits the number of times that the direction of cutter movement can change, and limits cutter movement when the number of changes exceeds a predetermined value, so that at least one cutter can no longer move.

However, in the technology just described, because the movement direction of the cutters is reversed if a jam occurs, the hedge trimmer will constantly change the movement direction of the cutters when the branches to be trimmed are too dense, until cutter movement stops because the number of direction changes is too high. This will result in hedge trimmer operation being stopped multiple times, thus reducing the operating efficiency and causing trouble for the operator of the hedge trimmer.

In a hedge trimmer based on another technology known to the applicant, when a jam or a loss in speed is detected, the driven trimmer cutter automatically enters reversal in order to release the plant to be trimmed that has caused the loss in speed, while the running speed applied to the cutter is reduced for a predetermined time. Before the reciprocating cutters automatically begin moving in the normal direction again, the operator does not release a switch. In addition, when a j am occurs, the user will generally become aware of the jam or the loss in speed, and instinctively release two switches or one switch so as to cut off the motive power of the electric motor, at which time the trimmer will be held at the position where the jam occurred. When electric power is supplied to the electric motor again, the cutters will automatically enter the opposite direction. In the situation just described, the movement direction of the cutters is controlled when a jam or loss in speed is detected.

However, in the technology just described, the reversal in direction of cutter movement is performed automatically by the hedge trimmer; when the plants to be trimmed are in a complicated formation, causing a high frequency of jams, the movement direction of the cutters will constantly switch between the normal direction and the reverse direction, but the operator cannot perform other operations and thus cannot adjust the reciprocation of the cutters, due to having both hands on switches at this time. Alternatively, the operator needs to release a switch, clear the cause of the jam manually, and then set the cutters reciprocating again. All of this reduces the efficiency of trimming work and makes the operator's work more dangerous, as well as increasing the operator's labour.

### Summary of the invention

In view of the abovementioned problems in the prior art, the present invention is proposed in order to solve all or at least one of these problems.

The present invention provides a reciprocating cutting apparatus, comprising a cutting unit, a drive unit, a control unit and a switch apparatus, wherein the cutting unit comprises at least one cutter which reciprocates between two set points of maximum travel under the driving action of the drive unit, in order to perform a cutting operation, and the control unit is configured to stop the driving action applied to at least one cutter of the cutting unit by the drive unit when an abnormal event is detected, wherein the control unit is further configured to restore the driving action applied to at least one cutter of the cutting unit by the drive unit when a predetermined sequence of operations on the switch apparatus is detected, and control the drive unit such that the cutting unit performs a reverse operation.

Optionally, the action of stopping the driving action applied to at least one cutter of the cutting unit by the drive unit is achieved by stopping a normal supply of power to the drive unit, and the action of restoring the driving action applied to at least one cutter of the cutting unit by the drive unit is achieved by restoring the normal supply of power to the drive unit.

Optionally, the abnormal event comprises at least one of the following: an operating current of the drive unit exceeds a threshold, the rate of change of the operating current of the drive unit exceeds a threshold, the speed of the at least one cutter is lower than a threshold, the acceleration of the at least one cutter exceeds a threshold, an electric motor torque of the drive unit exceeds a threshold, and the rate of change of the electric motor torque of the drive unit exceeds a threshold.

Optionally, the abnormal event comprises at least one of the following continuing for a predetermined time: the operating current of the drive unit exceeds a threshold, the rate of change of the operating current of the drive unit exceeds a threshold, the speed of the at least one cutter is lower than a threshold, the acceleration of the at least one cutter exceeds a threshold, the electric motor torque of the drive unit exceeds a threshold, and the rate of change of the electric motor torque of the drive unit exceeds a threshold.

Optionally, the abnormal event comprises at least two of the following occurring simultaneously: the operating current of the drive unit exceeds a threshold, the rate of change of the operating current of the drive unit exceeds a threshold, the speed of the at least one cutter is lower than a threshold, the acceleration of the at least one cutter exceeds a threshold, the electric motor torque of the drive unit exceeds a threshold, and the rate of change of the electric motor torque of the drive unit exceeds a threshold.

Optionally, the switch apparatus comprises a first switch and a second switch, the cutting unit performs the cutting operation if the first switch and the second switch are pressed down simultaneously, and stops the cutting operation when one of the first switch and the second switch is released.

Optionally, the predetermined sequence of operations comprises a first operation step, which comprises a user pressing down the first switch at least twice consecutively within a first predetermined time Δt1 and holding down the second switch.

Optionally, the control unit is configured to not restore the driving action applied to at least one cutter of the cutting unit by the drive unit before the predetermined sequence of operations is completed.

Optionally, the first predetermined time Δt1 is less than 1 second.

Optionally, the first predetermined time Δt1 is less than 500 milliseconds.

Optionally, the predetermined sequence of operations comprises a second operation step, which precedes the first operation step and comprises detecting the abnormal event.

Optionally, the predetermined sequence of operations comprises a third operation step, which precedes the first operation step and comprises releasing the first switch and the second switch.

Optionally, the cutting apparatus comprises a first handle and a second handle, and the first switch and second switch are arranged on the first handle and second handle respectively.

Optionally, the switch apparatus further comprises a third switch.

Optionally, the predetermined sequence of operations comprises a first operation step, which comprises a user pressing down the third switch.

Optionally, the control unit is configured to not restore the driving action applied to at least one cutter of the cutting unit by the drive unit before the predetermined sequence of operations is completed.

Optionally, the predetermined sequence of operations comprises a second operation step, which is simultaneous with the first operation step and comprises pressing down at least one of the first switch and the second switch.

Optionally, the predetermined sequence of operations comprises a third operation step, which precedes the first operation step and comprises releasing the first switch and the second switch.

Optionally, in the reverse operation, the direction of movement of the at least one cutter is opposite to the direction of movement before the abnormal event.

Optionally, in the reverse operation, the direction of movement of the at least one cutter alternates a predetermined number of times.

Optionally, in the reverse operation, the movement speed of the at least one cutter is reduced.

Optionally, the control unit is configured to stop the supply of power to the drive unit after the reverse operation.

Optionally, the control unit is configured to permit control of the drive unit to drive the at least one cutter to perform the cutting operation without the predetermined sequence of operations if there is no user operation within a predetermined time after the abnormal event occurs.

The cutting apparatus according to the present invention enables the user to flexibly choose whether to enter a forward operation or reverse operation according to the occurrence/clearing of a jam without the need to remove his/her hand from the cutting apparatus; this greatly improves the motility of user operation, increases operating efficiency and reduces the risk of the user being injured while performing a cutting operation.

### Brief description of the drawings

In order to explain more clearly the technical solution in embodiments of the present application, a simple description is given below of the drawings that need to be used in the description of the embodiments, but obviously, the drawings in the following description are merely some embodiments disclosed in the present application, and are not limiting to those skilled in the art.
Fig. 1 shows an example of the overall structure of the cutting apparatus in the present invention.
Fig. 2 shows an example of the structure of the cutting unit in the present invention.
Fig. 3 shows an example of the structure of the first cutter in the present invention.
Fig. 4 shows an example of the structure of the housing in the present invention.
Fig. 5 shows an example of the control unit in the present invention.
Fig. 6 shows an example of a flow chart of the method for controlling the cutting apparatus in the present invention.

### Detailed description of the invention

In the subsequent claims and the foregoing description of the present invention, except in the case of additional contextual requirement due to language of expression or necessary implication, the word "comprises" or a variant for example (e.g. "includes" or "contains") is used in an inclusive way, i.e. indicates the existence of the feature mentioned, but does not rule out the existence or addition of other features in various embodiments of the present invention.

For example, "horizontal", "vertical", "transverse", "longitudinal", "above", "below" and similar terms used herein are intended to describe the present invention in the orientation which it has in normal use, rather than limit the present invention to any specific orientation.

The forward operation and reverse operation herein are defined in order to facilitate explanation of the technical solution, being relative to each other; all that is required is for one of the two operations to correspond to a cutting operation when the electric motor is rotating in a first direction, while the other corresponds to a cutting operation when the electric motor is rotating in a second direction. In addition, the first direction and second direction of rotation are also relative to each other; all that is required is for the two directions to be opposite to each other. There is no need to impose a restriction whereby the first direction is clockwise and the second direction is anticlockwise; the opposite scenario is also possible, i.e. the first direction being anticlockwise and the second direction being clockwise.

It should be understood that if any prior art publication is cited herein, such a citation does not mean that the publication is acknowledged as forming part of common knowledge in the art in any country.

Embodiments of the present invention are described in detail below with reference to the drawings. It should be understood that the embodiments below are not intended to limit the present invention, and with regard to the method of solving problems according to the present invention, there is not necessarily a requirement for combination of all of the aspects described according to the embodiments below. For simplicity, identical markings or labels are used for identical structural parts or steps, and a description thereof is omitted.

### Cutting apparatus

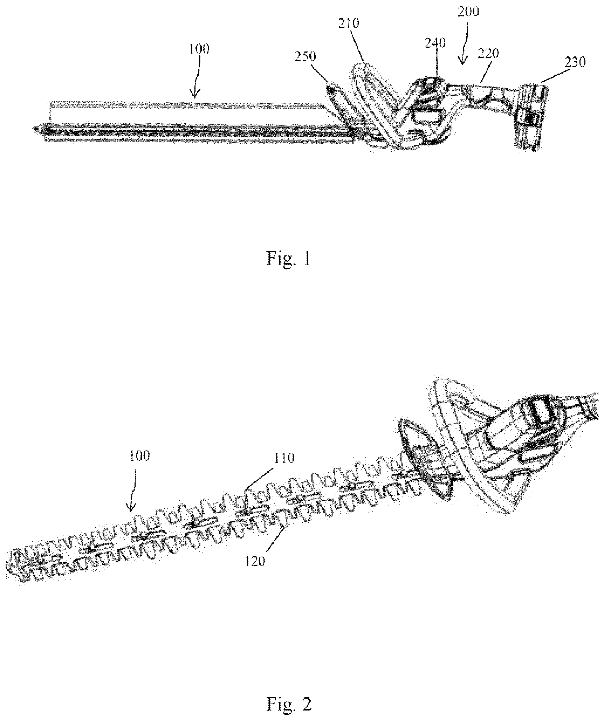

Fig. 1 shows an example of the reciprocating cutting apparatus of the present invention, taking a hedge trimmer as an example. In fact, the reciprocating cutting apparatus of the present invention is not limited to a hedge trimmer, and can also be another apparatus which performs cutting through the reciprocation of cutters, e.g. loppers, pruning saws, etc. The cutting apparatus at least comprises a cutting unit, a drive unit, a control unit and a switch apparatus.

Fig. 1 shows the overall structure of the hedge trimmer according to some embodiments of the present invention. The hedge trimmer comprises a cutting unit 100, a housing 200, a switch apparatus arranged on the housing, and a control unit and a drive unit which are arranged in the housing.

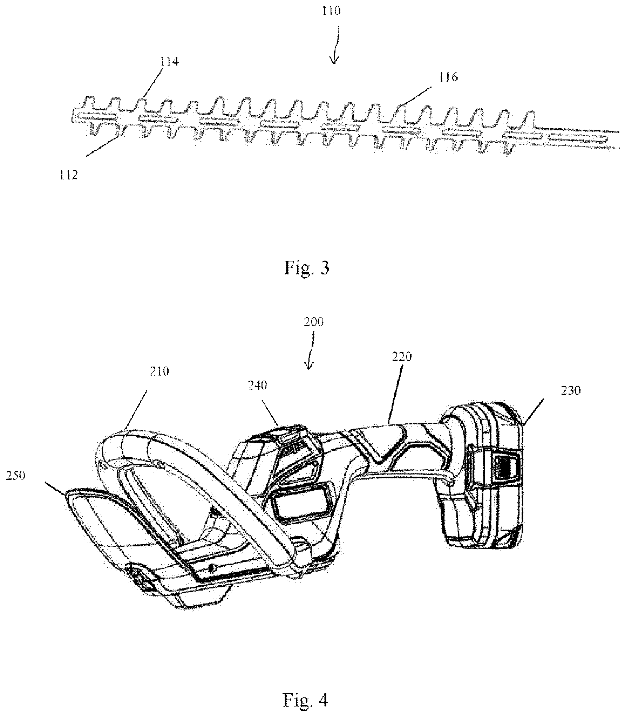

An exemplary structure of the cutting unit 100 is shown in Figs. 2 and 3; some components have been hidden in Figs. 2 and 3 in order to illustrate the structure of the cutting unit 100 more clearly. The cutting unit 100 may comprise only one cutter (e.g. a pruning saw), but may also comprise two or more cutters (e.g. a hedge trimmer). The cutter reciprocates between two set points of maximum travel under the driving action of the drive unit, in order to perform a cutting operation. As shown in Fig. 2, the cutting unit 100 comprises a first cutter 110 and a second cutter 120, which can have substantially identical structures, being laid one on top of the other in a mutually offset fashion, so as to form cutting gaps. The spacing of the cutting gaps changes as the first cutter 110 and second cutter 120 reciprocate relative to one another, thereby enabling the hedge trimmer to trim branches.

Fig. 3 shows the structure of the first cutter 110. The structure of the second cutter is substantially identical thereto. The first cutter 110 may comprise identical teeth or teeth of different types. In some embodiments, the first cutter 110 comprises first teeth 112, second teeth 114 and third teeth 116. The first teeth 112 are located at one side of the cutter, and for example have a shape similar to a trapezium. Blades are provided on two sides of the first tooth 112 (i.e. on the two legs of the trapezium), and are capable of trimming branches. Compared with the second teeth 114 and third teeth 116, the first teeth 112 have a smaller width in the transverse direction (i.e. the width direction of the trapezium). The top end of the first tooth 112 (i.e. the upper base of the trapezium) is substantially linear and has no blade. The second teeth 114 and third teeth 116 are located at the other side of the cutter. The second teeth 114 for example have a shape similar to a trapezium. No blades are provided on two sides of the second tooth 114. Compared with the third teeth 116, the second teeth 114 have a smaller width, and the top ends thereof are substantially linear and have no blades. The third teeth 116 have a shape similar to a sine curve, and the top ends thereof are smooth curves and have no blades. The third teeth 116 have a greater width in the transverse direction.

The first cutter 110 and second cutter 120 are laid one on top of the other and facing each other, being driven by the drive unit to reciprocate relative to each other, thereby generating a cutting force so as to perform a cutting operation. The drive unit for example comprises a motor. It is possible for one of the first cutter 110 and second cutter 120 to be configured as a fixed cutter while the other is configured as a moveable cutter, with the two cutters reciprocating relative to each other so as to generate a cutting force, but it is also possible for both the first cutter 110 and the second cutter 120 to be configured as moveable cutters. The electric motor drives one cutter to reciprocate relative to the other cutter, or drives both cutters to reciprocate. When the user uses the hedge trimmer to trim trees, the cutting gaps formed by the first cutter 110 and second cutter 120 change as the two cutters reciprocate relative to each other, thereby generating a cutting force to trim branches in the cutting gaps. When branches are being trimmed, if the branches are more profuse or are of a larger diameter, jams might occur, i.e. the cutters are jammed by the branches and unable to continue cutting the branches. In this situation, an abnormal event caused by the jam will occur in the cutting apparatus. In other words, when the cutting apparatus of the present invention detects an abnormal event, it is presumed that a jam has occurred, and a corresponding anti-jam operation is therefore permitted to be performed. In some embodiments, the cutting apparatus may further comprise one or more indicating means, to issue a clear indication to the operator when an abnormal event is detected. The indicating means comprises visual feedback means (e.g. an LED indicator lamp), auditory feedback means (e.g. a buzzer) and tactile feedback means (e.g. a vibrating means).

The occurrence of an abnormal event can be judged in various ways, alone or in combination. In some embodiments, an abnormal event is considered to have occurred when one or more of the following happens: the load current (i.e. the operating current of the drive unit) exceeds a threshold, the rate of change of the load current exceeds a threshold, the cutter speed is lower than a threshold, the cutter acceleration exceeds a threshold, the electric motor torque exceeds a threshold, the rate of change of the electric motor torque exceeds a threshold, etc. In some embodiments, when one or more of the abovementioned events occurs and continues for a predetermined time, an abnormal event is considered to have occurred. The way in which the abovementioned thresholds are determined can be easily obtained through testing by those skilled in the art after familiarisation with the specifications of the hedge trimmer of the present invention, and the way in which the abovementioned values are acquired can be easily obtained by those skilled in the art through configuration of sensors after familiarisation with the hedge trimmer of the present invention; no further description is given here.

The cutting unit has been hidden in Fig. 4, in order to describe the housing 200 more clearly. The housing 200 of the hedge trimmer comprises a first handle 210, a second handle 220, a battery assembly 230, an electric motor accommodating part 240 and a hand guard 250. The housing 200 may be integrally formed, or formed as an assembly of multiple components. In some embodiments, the first handle 210 is a front handle, configured to be gripped by one hand of the operator during use. The second handle 220 is a rear handle, configured to be gripped by the other hand of the operator during use. The electric motor accommodating part 240 is located between the first handle 210 and the second handle 220, and the battery assembly 230 is located behind the first handle 210 and the second handle 220.

The switch apparatus may be arranged on or in the housing, and may comprise one or more mechanical switch, touch switch or photoelectric switch for example, as well as other associated components. When the switch apparatus comprises one or more mechanical switch, an operation performed on the switch apparatus by the user may for example comprise pressing down and releasing the one or more mechanical switch, in order to start up the hedge trimmer and shut off the hedge trimmer, etc. In the embodiments below, a switch apparatus comprising one or more mechanical switch is used for illustration.

As shown in Fig. 4, the front handle 210 is for example an annular handle located at a front part of the housing 200, and a first switch (front switch) is provided on or in the front handle 210. The electric motor accommodating part 240 is between the front handle 210 and rear handle 220, and has a motor provided therein. The rear handle 220 is for example a handle located at a rear part of the housing 200, and a second switch (rear switch) is provided on or in the rear handle 220. The first switch (front switch) and second switch (rear switch) are used for controlling the activation of the cutting unit. In some embodiments, for the sake of safety, the cutting unit 100 can perform a cutting operation only when the first switch and second switch are both pressed down. The rear handle 220 extends to a rear end of the housing 200, the rear end having a larger cross-sectional area than the rear handle 220 in order to install the battery assembly 230 which accommodates a battery. The hand guard 250 is arranged in front of the front handle 210, separating the front handle from the cutting unit in order to protect the user's hand from injury by the cutting unit or the object to be cut.

A space for accommodating the battery is provided in the battery assembly 230, in order to supply electric power to the hedge trimmer. The battery installed in this space may be a battery pack unit comprising multiple batteries, or may be a rechargeable battery such as a lithium ion battery, or may be a non-rechargeable but replaceable battery.

When the user uses the hedge trimmer, the user's two hands grip the front handle 210 and rear handle 220 respectively, so as to grip the hedge trimmer stably. At the same time, the user's hands can press down or release the switches arranged on the handles. The hedge trimmer can be started up by pressing down the first switch and second switch simultaneously.

The hedge trimmer further comprises a drive unit 300 arranged in the electric motor accommodating part 240. The drive unit 300 is supplied with electric power by the battery assembly 230, in order to drive the cutting unit 100.

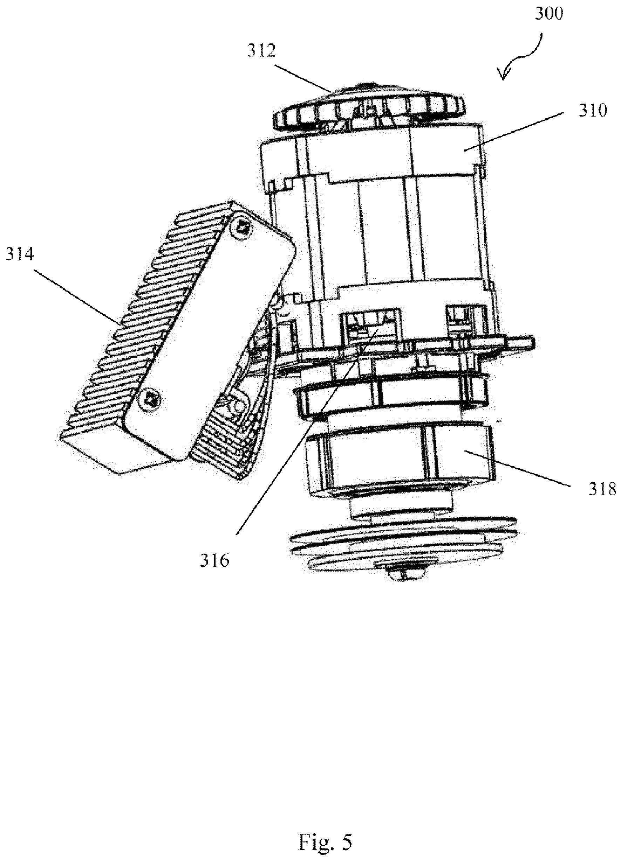

As shown in Fig. 5, the drive unit 300 comprises an electric motor 310, a fan 312, a heat sink 314, an air inlet 316 and a chamber 318. The electric motor 310 can rotate clockwise or anticlockwise, driving the cutting unit 100 to cut the object to be cut. The fan 312 is located at the top of the electric motor 310 in order to cool the electric motor. The heat sink 314 cools a control circuit. The air inlet 316 is located at the bottom of the motor; air enters the electric motor 310 via the air inlet 316, to cool the electric motor 310.

The control unit of the present invention comprises the control circuit. The control circuit can control the operation of the various units of the hedge trimmer, e.g. control the electric motor of the drive unit to rotate in a first direction or a second direction, so that the cutting unit performs a forward operation or a reverse operation, etc. The control circuit can also perform processing and arithmetical operations, e.g. determine whether the switch has been pressed down within a predetermined time, etc. The control circuit may comprise one or more printed circuit board in order to control the hedge trimmer, and perform various types of processing including the anti-jamming mechanism of the present invention.

A description is given below, taking as an example the case where the control circuit comprises two printed circuit boards. A first circuit board may be arranged at a front end of the electric motor, and a cross-sectional shape thereof may correspond to a cross-sectional shape of the electric motor, so that the first circuit board and the electric motor can be fitted together. The first circuit board can perform various types of control of the hedge trimmer, e.g. various types of control relating to the anti-jamming mechanism of the present invention, which are described below. A second circuit board can for example perform other additional control functions. The first circuit board and second circuit board may be arranged on the heat sink, in order to be cooled.

In addition, the hedge trimmer of the present invention may further comprise an overcurrent protection unit (not shown); when for example an excessively large load current occurs due to cutter movement being jammed by a branch to be trimmed (a jam), the overcurrent protection unit can cut off the supply of current to the electric motor of the drive unit, thereby stopping the cutting operation of the cutting unit.

In addition, the hedge trimmer of the present invention may further comprise a transmission system arranged between an electric motor output shaft and the cutters. In some embodiments, when it is determined that an abnormal event has occurred, the control unit can cut off a transmission path of the transmission system, in order to stop the driving action applied to the cutters by the electric motor.

When the user is operating the hedge trimmer of the present invention, the user's two hands grip the first handle and the second handle respectively at the same time, and turn on the first switch and second switch. The controller determines that both switches have been pressed down, and then performs control to supply electric power to the electric motor, in order to drive the cutting unit 100 to trim trees.

When the tree to be trimmed is too dense or has too large a diameter, this might result in a jam in which the cutters are jammed by a branch, thereby causing an abnormal event to occur. For the present invention, an anti-jamming control mechanism has been designed, in order to eliminate abnormal events that occur. The anti-jamming control mechanism of the present invention allows the rotation direction of the electric motor to be controlled, in order to control the cutter reciprocation of the cutting unit, i.e. perform control in order to reverse the direction of cutter movement. The reversal of cutter movement can help to release the jammed branch.

### Anti-jamming control mechanism

The anti-jamming control mechanism of the present invention is triggered via a predetermined sequence of operations on the hedge trimmer. The predetermined sequence of operations may comprise one or more operation steps. At least one operation step comprises a manual operation step. In contrast to automatic triggering of an anti-jamming operation, the anti-jamming control mechanism of the present invention lets the operator know of the occurrence of a j am clearly. Over time, the operator will be able to achieve a clear understanding of the cutting capacity limits of the hedge trimmer of the present invention, and will thus be able to constantly amend the manner of operation according to experience. This will enable the operator to avoid jams. In addition, due to the manual operation step, the operator of the present invention will have a mental expectation of an anti-jamming operation that is about to be performed, and as a result, the operator will find it easier to maintain balance while performing the anti-jamming operation. Furthermore, the manner of operation of the present invention also enables the operator to choose whether to trigger the anti-jamming operation or perform manual intervention directly, e.g. remove the hedge trimmer from the region of the cutting operation. This is advantageous in many situations, because when the cutter cuts and becomes embedded in a thick branch and thus becomes jammed, the jam cannot be cleared even if the cutter is moved in reverse. That is to say, the cutter will remain embedded in the branch. In this case, manual intervention by the operator is needed to remove the branch from the cutter gap. Blindly performing automatic anti-jamming operations will only waste the operator's time. Thus, the definition of the predetermined sequence of operations in the present invention increases the convenience and practicality of the operator operating the hedge trimmer to perform the anti-jamming operation.

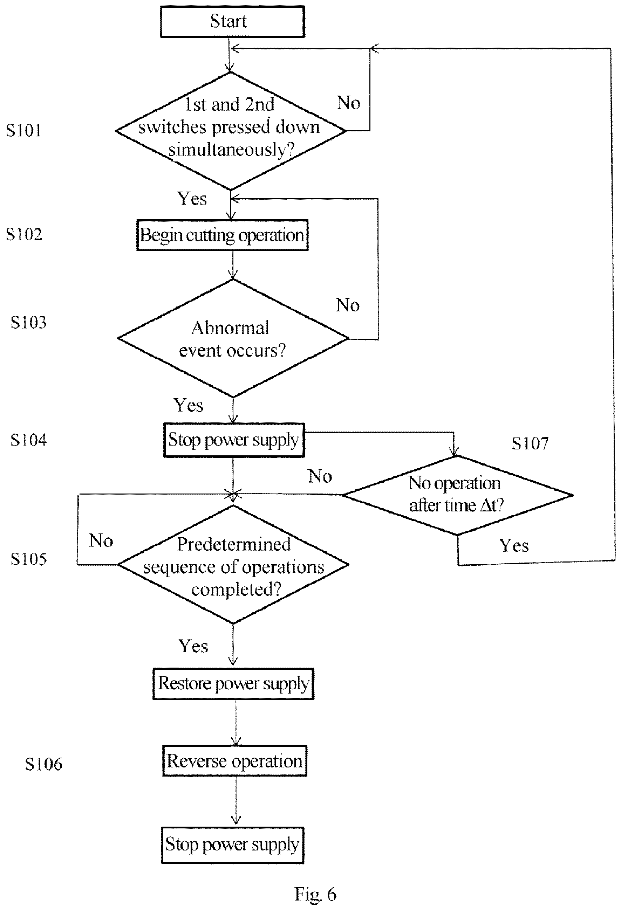

Some embodiments of the abovementioned anti-jamming control mechanism are explained below in conjunction with Fig. 6. The various determination processes and control processes performed therein are accomplished by means of the control unit. The description below is based on the following scenario: the user switches on the hedge trimmer, which operates normally to perform a cutting operation (e.g. a forward operation) on branches. At this time, as shown in step S101, the control unit determines whether the first switch (front switch) and second switch (rear switch) of the hedge trimmer are pressed down simultaneously. If only one switch is pressed down, the control unit does not start up the hedge trimmer. If it is determined that the first switch and second switch are pressed down simultaneously, step S102 is performed, controlling the drive electric motor to rotate, such that the cutting unit 100 cuts an object to be cut such as a branch in a normal operating mode. The normal operating mode may be a mode in which the hedge trimmer is used to trim branches in the absence of any jam, at which time the cutting unit 100 performs a forward operation. Subsequently, a jam occurs in the process of trimming the branches (e.g. a branch jams the cutters). For this reason, a sensor in the hedge trimmer senses that an abnormal event has occurred, such as the load current exceeding a threshold.

This process is shown in detail in step S103. In step S103, the control unit determines whether an abnormal event has occurred. For example, when the branches to be trimmed are too dense or have too large a diameter, or another circumstance causing a jam occurs, a jam will occur. The sensor then detects an abnormal event, such as the load current exceeding the threshold.

If the result of S103 is "No", i.e. the control unit determines that no abnormal event has occurred, then the processing returns to step S102, continuing to perform a normal cutting operation.

If the result of S103 is "Yes", i.e. the control unit determines that an abnormal event has occurred, the processing moves to step S104.

In step S104, the control unit performs control such that the supply of power to the drive unit is stopped, thereby stopping the driving action applied to the cutter of the cutting unit by the drive unit, such that the cutting unit stops the cutting operation. At the same time, a timer begins counting time from the moment when the driving action was stopped.

The action of stopping the supply of power to the drive unit may for example be accomplished by activating the overcurrent protection unit of the hedge trimmer so as to cut off the normal supply of electric power to the electric motor. This causes the cutting unit to stop the cutting operation regardless of whether the user has released the first switch and second switch, so can greatly improve the level of safety when the user is operating the hedge trimmer. It should be noted that in the embodiment shown in the figure, the control unit stops the driving action applied to the cutter of the cutting unit by the drive unit by stopping the supply of power, but those skilled in the art will understand that the control unit could stop the driving action applied to the cutter of the cutting unit by the drive unit in other ways; for example, in some embodiments, the control unit can cut off transmission between the electric motor and the cutter, such that the cutting unit stops the cutting operation. When the normal supply of power to the electric motor is cut off in response to a j am occurring, the control unit can remain in an energized state, in order to save a record of the jam occurring. In other embodiments, the control unit may comprise a non-volatile memory to store the occurrence of an abnormal event or jam. In other words, the detection of the occurrence of an abnormal event can serve as one operation step in the predetermined sequence of operations for triggering anti-jamming control, and becomes a condition for triggering an anti-jamming operation. In other embodiments, instead of the detection of the occurrence of an abnormal event, the releasing of the first switch and second switch by the operator can be used as one operation step in the predetermined sequence of operations. Of course, this is not necessary.

After the control unit performs control so as to perform the abovementioned overcurrent protection, thereby causing the cutting unit to stop the cutting operation, the user discovers that the cutting unit has already stopped the cutting operation and wishes to continue the cutting operation. At this time, the user might keep the first switch and second switch pressed down, or press down the first switch and second switch again to try to restart the cutting apparatus. However, the abovementioned operation cannot restart the cutting apparatus. In other words, the control unit has not detected the completion of the complete predetermined sequence of operations, and therefore will not restore the normal supply of power to the drive unit. As a reminder, the control unit can control the indicating means to issue an indication of a jam, e.g. by lighting up, or by means of an audible alarm or vibration alarm, etc.

In step S105, the control unit judges whether the predetermined sequence of operations is received from the user within a predetermined time.

If the judgement result of step S105 is negative, i.e. the predetermined sequence of operations is not received from the user within a predetermined time, the hedge trimmer will remain in a powered-off state. The control unit continues the operation of judging whether the predetermined sequence of operations is received from the user within a predetermined time.

In addition, in some embodiments, taking into account a scenario in which the user might choose to clear the jam manually, the control apparatus begins counting time from the time when overcurrent protection was triggered, until the user presses down the first switch and second switch simultaneously again. The time period is denoted Δt. If the time period Δt exceeds a threshold, then it is judged that the user chooses to clear the jam manually. In this case, the control apparatus overwrites the predetermined sequence of operations, so that even if the user has not completed the predetermined sequence of operations, and merely presses down the first switch and second switch simultaneously, restarting of the hedge trimmer is permitted. The threshold may be a relatively long time period, e.g. 3 - 10 seconds, or 5 - 8 seconds, or 6 - 7 seconds.

The abovementioned situation can be explained in conjunction with step S107. After stopping the supply of power to the drive unit in step S104, in step S107 the control unit determines whether the user has not performed an operation within the predetermined time period Δt. If the user has not performed an operation, the processing returns to step S101, so as to cause the hedge trimmer to continue performing the cutting operation in step S102 if the user presses down the first switch and second switch simultaneously.

If the judgement result of step S105 is positive, i.e. the predetermined sequence of operations is received within a predetermined time, the processing advances to step S106.

The following are embodiments in which the predetermined sequence of operations must be completed. In some embodiments, the predetermined sequence of operations comprises holding down one of the first switch and second switch, and at the same time pressing down the other of the first switch and second switch at least twice consecutively within a predetermined time period. The control unit performs control, such that the moment when the first switch and second switch are pressed down simultaneously is taken to be the time point when timing begins. If the user has kept both hands on the first switch and second switch all along, then the moment when the control unit performs control in order to perform the abovementioned overcurrent protection and thereby cause the cutting unit to stop the cutting operation is taken to be the time point when timing begins. The timing can be used to determine whether the user presses down the other of the first switch and second switch at least twice consecutively within a predetermined time.

In step S106, the control unit performs control to supply electric power to the electric motor, so as to drive the cutting unit to perform a reverse cutting operation.

As an example of completing the predetermined sequence of operations, e.g. after timing has begun, the control unit determines whether the user presses down the first switch twice consecutively within a first predetermined time Δt1 and holds down the second switch. If this operation step is completed, then the predetermined sequence of operations is considered to have been completed, so the control unit performs control to cause the cutting unit 100 to enter an anti-jamming or reverse operation mode. In the reverse operation mode, the cutting unit 100 performs a reverse operation, so as to clear the cause of the jam, e.g. jamming of the cutters by branches due to the branches being too dense or having too large a diameter. For example, the control circuit reverses the rotation direction of the motor, such that the movement direction of at least one of the first cutter and second cutter is the reverse of the movement direction before the abnormal event occurred. In other embodiments, the control circuit causes the rotation direction of the motor to alternate a certain number of times, such that at least one of the first cutter and second cutter achieves an effect similar to vibration. The reverse operation mentioned above releases the branch jammed between the cutters. The predetermined time Δt1 can be set in advance by the user, e.g. less than 1 second, e.g. less than 500 milliseconds, or less than 300 milliseconds, etc.

The processing above, in which the cutting unit 100 is caused to perform a reverse operation by determining whether the user presses down the first switch twice consecutively within the first predetermined time Δt1 and holds down the second switch, can be implemented through steps one to three below.

In step one, a determination is made as to whether the first switch is released within a second predetermined time Δt2, while the second switch is held down. The predetermined time Δt2 can be set in advance by the user, e.g. less than 800 milliseconds, optionally less than 500 milliseconds, or less than 200 milliseconds, etc. The starting point for timing of the second predetermined time Δt2 is the same as that of the first predetermined time Δt1.

When the result of step one is "Yes", this might mean that the user wishes to perform a further operation to cause the cutting unit to perform a reverse operation in order to clear the cause of the jam. When the result of step one is "No", this means that within the time period Δt2, both of the user's hands are held on the first switch and second switch continuously, without releasing the first switch and second switch. In this case, if the abovementioned operation of overwriting the predetermined sequence of operations has not taken place, it will not be possible to start up the cutting unit to perform a forward operation. At this time, the indicating means can issue an indication signal to notify the operator of the need to complete the predetermined sequence of operations to perform a reverse operation.

In step two, i.e. in the case where the result of step one is "Yes", a determination is made as to whether the first switch is pressed down again and remains in the pressed-down state for a third predetermined time Δt3, while the second switch remains held down. The predetermined time Δt3 can be set in advance by the user, e.g. less than 500 milliseconds, e.g. less than 300 milliseconds, or less than 150 milliseconds, etc. Moreover, Δt2 + Δt3 ≤ Δt1.

In step three, i.e. in the case where the result of step two is "Yes", meaning that the user presses down the first switch twice consecutively within a short time while holding down the second switch, the predetermined sequence of operations is completed. At this time, the processing proceeds to step S106: the control unit controls the drive unit to perform start-up, controlling the cutting unit to perform a reverse operation, in order to release the branch jamming the cutters. In some embodiments, the start-up is a soft start-up, i.e. the rotation speed of the electric motor gradually increases from zero to a rated rotation speed within a certain time.

In some embodiments, when step S106 of the reverse operation has been completed, the control unit cuts off the supply of electric power to the drive unit. Alternatively, it is possible to directly enter step S107, wherein the control unit controls the drive unit to continue the forward operation.

If the result of step two or step three is negative, this means that the user does not press down the first switch within a short time. In this case, the first switch is in a released state and the second switch is in a pressed-down state, so the hedge trimmer will remain in a powered-off state.

In the embodiment above, if the cutter of the cutting unit stops moving because a jam occurs, the control unit can determine whether to cause the cutting unit to perform a reverse operation on the basis of the predetermined sequence of operations of the user. If the user holds down the first switch and second switch simultaneously for a predetermined time period (e.g. Δt1, Δt1 ≥ Δt2 + Δt3) and does not release the first switch, then the control unit will cause the cutting unit to continue performing the normal cutting operation without changing the direction of operation of the cutting unit only if the predetermined sequence of operations is overwritten. Otherwise, the control unit will regard the predetermined sequence of operations as not having been completed, and will not restore the supply of electric power to the drive unit. If the user rapidly presses down and releases the first switch within a predetermined time period (e.g. Δt2), and then presses down the first switch again and maintains this state for a predetermined time period (e.g. Δt3), this means that the user has rapidly pressed down the first switch twice consecutively, in which case the control unit performs control to cause the cutting unit to begin a reverse operation, in order to clear the cause of the jam. That is, the reverse operation is activated by the predetermined sequence of operations in which the user rapidly presses down the first switch twice within a short time period (e.g. Δt1) while holding down the second switch.

According to the embodiments of the abovementioned anti-jamming control mechanism of the present invention, the user can flexibly choose to enter the reverse operation mode or continue in a forward operation mode according to the occurrence/clearing of a jam without the need to remove his/her hand from the cutting apparatus, and without needing to remove his/her hand from the handle of the hedge trimmer; this improves the motility of user operation, increases operating efficiency and reduces the risk of the user being injured while performing a cutting operation.

In addition, in the method described above, the cutting unit can also be caused to begin a reverse operation by judging whether the user presses down the second switch twice consecutively within a short time, in order to clear the cause of the jam. That is, in the anti-jamming control mechanism of the present invention, the functions of the first switch and second switch can be interchanged without affecting the result.

In some embodiments of the anti-jamming control mechanism, apart from the differences described below, the manner of control can be the same as in the embodiments described above. In these embodiments, a third switch is provided on the cutting apparatus. The third switch may be arranged at a front end of the rear handle, so as to be easy for the operator to control with his/her thumb. The third switch can independently provide a control function for the activation of a reverse operation. Thus, the predetermined sequence of operations in the embodiments described above is replaced by the third switch being pressed down within a short time. In some embodiments, the predetermined sequence of operations comprises not only pressing down the third switch but also simultaneously pressing down at least one of the first switch and second switch, in order to provide additional safety protection. In a further embodiment, the predetermined sequence of operations further comprises an operation step of releasing the first switch and second switch before pressing down the third switch.

By the same principle, the control unit may be configured to not restore the supply of electric power to the drive unit before the third switch is pressed down. Alternatively, the control function of the third switch can be overwritten, so that in the absence of any user operation within a time period Δt after an abnormal event occurs, the user is judged to have chosen to clear the jam manually. In this case, restarting of the cutting apparatus is permitted even if the user merely presses down the first switch and second switch simultaneously.

Through the above embodiments, the user can cause the cutting unit to perform a reverse operation via the operation of pressing down the third switch. In this way, the convenience with which the user can operate the hedge trimmer is further increased.

It should be understood that the anti-jamming control mechanism of the present invention is explained by way of a cutting apparatus, e.g. a hedge trimmer, in the present invention, but it not limited to an apparatus for cutting plants, and can also be applied to other apparatuses that perform cutting through the reciprocation of cutters.

Those skilled in the art should understand that although the present invention has been described with reference to exemplary embodiments above, the abovementioned embodiments merely illustrate the technical concept and characteristics of the present invention, and cannot be used to limit the scope of protection of the present invention. Any equivalent alterations or amendments made according to the spirit and substance of the present invention should be included in the scope of protection of the present invention.

## Claims

1. Reciprocating cutting apparatus, comprising a cutting unit, a drive unit, a control unit and a switch apparatus, wherein
the cutting unit comprises at least one cutter which reciprocates between two set points of maximum travel under the driving action of the drive unit, in order to perform a cutting operation,
the control unit is configured to stop the driving action applied to at least one cutter of the cutting unit by the drive unit when an abnormal event is detected,
wherein the control unit is further configured to restore the driving action applied to at least one cutter of the cutting unit by the drive unit when a predetermined sequence of operations on the switch apparatus is detected, and control the drive unit such that the cutting unit performs a reverse operation.

2. Reciprocating cutting apparatus according to Claim 1, wherein the abnormal event comprises at least one of the following: an operating current of the drive unit exceeds a threshold, the rate of change of the operating current of the drive unit exceeds a threshold, the speed of the at least one cutter is lower than a threshold, the acceleration of the at least one cutter exceeds a threshold, an electric motor torque of the drive unit exceeds a threshold, and the rate of change of the electric motor torque of the drive unit exceeds a threshold.

3. Reciprocating cutting apparatus according to Claim 2, wherein the abnormal event comprises at least one of the following continuing for a predetermined time: the operating current of the drive unit exceeds a threshold, the rate of change of the operating current of the drive unit exceeds a threshold, the speed of the at least one cutter is lower than a threshold, the acceleration of the at least one cutter exceeds a threshold, the electric motor torque of the drive unit exceeds a threshold, and the rate of change of the electric motor torque of the drive unit exceeds a threshold.

4. Reciprocating cutting apparatus according to Claim 2, wherein the abnormal event comprises at least two of the following occurring simultaneously: the operating current of the drive unit exceeds a threshold, the rate of change of the operating current of the drive unit exceeds a threshold, the speed of the at least one cutter is lower than a threshold, the acceleration of the at least one cutter exceeds a threshold, the electric motor torque of the drive unit exceeds a threshold, and the rate of change of the electric motor torque of the drive unit exceeds a threshold.

5. Reciprocating cutting apparatus according to Claim 1, wherein the switch apparatus comprises a first switch and a second switch, the cutting unit performs the cutting operation if the first switch and the second switch are pressed down simultaneously, and stops the cutting operation when one of the first switch and the second switch is released; preferably, the cutting apparatus comprises a first handle and a second handle, and the first switch and second switch are arranged on the first handle and second handle respectively.

6. Reciprocating cutting apparatus according to Claim 5, wherein the predetermined sequence of operations comprises a first operation step, which comprises a user pressing down the first switch at least twice consecutively within a first predetermined time Δt1 and holding down the second switch; preferably, the first predetermined time Δt1 is less than 1 second, and more preferably, the first predetermined time Δt1 is less than 500 milliseconds.

7. Reciprocating cutting apparatus according to Claim 6, wherein the predetermined sequence of operations comprises a second operation step, which precedes the first operation step and comprises detecting the abnormal event.

8. Reciprocating cutting apparatus according to Claim 6, wherein the predetermined sequence of operations comprises a third operation step, which precedes the first operation step and comprises releasing the first switch and the second switch.

9. Reciprocating cutting apparatus according to Claim 5, wherein the switch apparatus further comprises a third switch, and the predetermined sequence of operations comprises a first operation step, which comprises a user pressing down the third switch.

10. Reciprocating cutting apparatus according to Claim 9, wherein the predetermined sequence of operations comprises a second operation step, which is simultaneous with the first operation step and comprises pressing down at least one of the first switch and the second switch.

11. Reciprocating cutting apparatus according to Claim 9, wherein the predetermined sequence of operations comprises a third operation step, which precedes the first operation step and comprises releasing the first switch and the second switch.

12. Reciprocating cutting apparatus according to Claim 6 or 9, wherein the control unit is configured to not restore the driving action applied to at least one cutter of the cutting unit by the drive unit before the predetermined sequence of operations is completed.

13. Reciprocating cutting apparatus according to Claim 1, wherein the reverse operation comprises at least one of the following:
the direction of movement of the at least one cutter is opposite to the direction of movement before the abnormal event;
the direction of movement of the at least one cutter alternates a predetermined number of times; and
the movement speed of the at least one cutter is reduced.

14. Reciprocating cutting apparatus according to Claim 1, wherein the control unit is configured to stop the supply of power to the drive unit after the reverse operation.

15. Reciprocating cutting apparatus according to Claim 1, wherein the control unit is configured to permit control of the drive unit to drive the at least one cutter to perform the cutting operation without the predetermined sequence of operations if there is no user operation within a predetermined time after the abnormal event occurs.
